# EUROPÄISCHE PATENTSCHRIFT

(11) **EP 0 986 166 B1**
(45) Veröffentlichungstag und Bekanntmachung des Hinweises auf die Patenterteilung: **31.03.2010**
(21) Anmeldenummer: 99117576.1
(22) Anmeldetag: 10.09.1999
(51) Int. Cl.: H02M 3/07

(54) **Ladungspumpenschaltung**
Charge pump circuit
Circuit de pompe de charge

(30) Priorität: 10.09.1998 DE 19841444
(43) Veröffentlichungstag der Anmeldung: 15.03.2000
(73) Patentinhaber: Infineon Technologies AG, 81669 München (DE)
(72) Erfinder: Christoph, Axel, 9500 Villach (AT); Lauterbach, Christl, 85635 Hoehenkirchen-Siegertsbrunn (DE)
(74) Vertreter: Patentanwälte Westphal, Mussgnug & Partner

(56) Entgegenhaltungen:
- EP-A- 0 403 823
- WO-A-98/16010
- US-A- 4 734 599
- US-A- 5 282 170

## Beschreibung

Die vorliegende Erfindung betrifft eine Ladungspumpenschaltung die folgende Merkmale aufweist:
eine Eingangsklemme, eine Ausgangsklemme, einen ersten Steuereingang und einen zweiten Steuereingang;
einen ersten Transistor mit einer Laststrecke, die zwischen die Eingangsklemme und die Ausgangsklemme geschaltet ist, und mit einer Steuerelektrode, die über eine erste Diode an die Eingangsklemme angeschlossen ist;
eine erste Kapazität, die zwischen den ersten Steuereingang und die Eingangsklemme geschaltet ist;
eine zweite Kapazität, die zwischen den zweiten Steuereingang und die Steuerelektrode des ersten Transistors geschaltet ist;
einen zweiten Transistor mit einer Steuerelektrode und mit einer Laststrecke, die zwischen die Eingangsklemme und die Steuerelektrode des ersten Transistors geschaltet ist.

Die Funktion derartiger Ladungspumpenschaltungen oder Ladungspumpen ist die Versorgung einer an die Ausgangsklemme angeschlossenen, vorzugsweise kapazitiven Last, mit einer Ausgangsspannung, deren Wert den Wert einer zur Verfügung stehenden Versorgungsspannung, die an die Eingangsklemme anlegbar ist, übersteigt. Derartige Schaltungen sind in EP-A-0403823 offenbart und finden beispielsweise Verwendung in Speicherbausteinen, wie EEPROMs, bei denen zum Beschreiben der Speicherzellen kurzzeitig hohe Spannungen erforderlich sind. Des weiteren kommen Ladungspumpenschaltungen zur Ansteuerung von Leistungs-MOSFET zum Einsatz, die zum Ansteuern einer sourceseitig angeschlossenen Last dienen.

Zum Erreichen großer Ausgangsspannungen werden üblicherweise eine Anzahl der bekannten Ladungspumpen zu einer mehrstufigen Ladungspumpe kaskadiert. Hierzu wird die Ausgangsklemme jeweils einer Ladungspumpe an die Eingangsklemme einer nachfolgenden Ladungspumpe angeschlossen. Die Ausgangsklemme der letzten Ladungspumpe in der Kaskade, der keine weitere Ladungspumpe nachgeschaltet ist, bildet dabei den Anschluß für die anzusteuernde Last.

Die Bereitstellung der Ausgangsspannung an der Ausgangsklemme jeder einzelnen Ladungspumpe, bzw. das Aufladen einer dort angeschlossenen kapazitiven Last, erfordert ein mehrstufiges Verfahren, bei dem in einem ersten Schritt die erste Kapazität über die Eingangsklemme aufgeladen wird. Durch Anlegen eines ersten Ansteuerpotentials an die erste Steuerklemme und durch nachfolgendes Anlegen eines zweiten Ansteuerpotentials an die zweite Steuerelektrode leitet der erste Transistor und eine der Ausgangsklemme nachgeschaltete Kapazität kann auf eine Spannung aufgeladen werden, die im wesentlichen um den Betrag des ersten Ansteuerpotentials über der Spannung an der ersten Kapazität liegt. Die Steuerelektrode des ersten Transistors liegt durch die zweite Kapazität und das zweite Ansteuerpotentials an einem Potential, welches das Potential an der Eingangsklemme übersteigt und damit ein sicheres Leiten des ersten Transistors und damit eine Minimierung der Spannungsverluste über dessen Laststrecke gewährleistet.

Aufgabe des zweiten Transistors ist es hierbei, nach Zurücknahme des ersten Ansteuerpotentials die Steuerelektrode des ersten Transistors mit seinem an die Eingangsklemme angeschlossenen Laststreckenanschluß kurzzuschließen, um den ersten Transistor zu sperren und dadurch ein Zurückfließen der an die Ausgangsklemme abgegebenen Ladung zu verhindern. Bei den bekannten Ladungspumpenschaltungen ist die Steuerelektrode des zweiten Transistors an die erste Kapazität einer nachfolgenden Ladungspumpenstufe angeschlossen, wobei aufgrund des nach Abschluß des Pumpvorgangs dort anliegenden höheren Potentials sichergestellt ist, daß der zweite Transistor zum Sperren des ersten Transistors leitet.

Nachteilig einer derartigen Kopplung des zweiten Transistors an die nächsthöhere Pumpstufe ist, daß für die letzte Pumpstufe, an deren Ausgangsklemme die Last angeschlossen ist, kein zweiter Transistor zum Sperren des ersten Transistors und damit auch keine zweite Kapazität vorgesehen werden kann. Die Steuerelektrode des ersten Transistors dieser letzten Pumpstufe liegt über die erste Diode maximal auf dem Potential des mit der Eingangsklemme verbundenen Laststreckenanschlusses. Hierdurch ergeben sich über der Laststrecke des ersten Transistors dieser letzten Pumpstufe Spannungsverluste, die den Wirkungsgrad der Gesamtanordnung aus mehreren Ladungspumpen verschlechtern.

Gleiches gilt, wenn nur eine Ladungspumpe mit einer Pumpstufe benötigt wird.

Aufgabe der vorliegenden Erfindung ist es eine Ladungspumpenschaltung zur Verfügung zu stellen, bei der unabhängig von einer weiteren Verschaltung Spannungsverluste über der Laststrecke des als Schalter wirkenden ersten Transistors minimiert sind.

Diese Aufgabe wird durch eine eingangs erwähnte Ladungspumpenschaltung gelöst, die zusätzlich eine Schaltungsanordnung zur Ladungsspeicherung aufweist mit einer ersten Klemme, die an die Steuerelektrode des ersten Transistors angeschlossen ist, und mit einer zweiten Klemme, die an die Steuerelektrode des zweiten Transistors angeschlossen ist.

Die erfindungsgemäße Schaltungsanordnung zur Ladungsspeicherung nimmt bei Anliegen des zweiten Ansteuerpotentials an der zweiten Steuerklemme eine Ladung über ihre erste Klemme auf. Die Schaltungsanordnung ist dabei so dimensioniert, daß das an der zweiten Klemme durch diese Ladung hervorgerufene Potential kleiner oder gleich dem Potential an der Eingangsklemme -und damit an dem Laststreckenanschluß des zweiten Transistors ist- solange das erste Ansteuerpotential an der ersten Steuerklemme anliegt; der zweite Transistor sperrt dann weitgehend. Nach Zurücknehmen des ersten Ansteuerpotentials übersteigt das Potential an der Steuerelektrode des zweiten Transistors das Potential an der Eingangsklemme; der zweite Transistor leitet und schließt so die Steuerelektrode des ersten Transistors mit seinem an die Eingangsklemme angeschlossenen Laststreckenanschluß kurz. Der erste Transistor sperrt und verhindert ein Zurückfließen von Ladung auf die erste Kapazität.

Vorteilhafte Ausgestaltungen der Erfindung sind Gegenstand der Unteransprüche.

Gemäß einer Ausführungsform der Erfindung ist vorgesehen, daß die Schaltungsanordnung zur Ladungsspeicherung eine Reihenschaltung einer Diode und einer Kapazität aufweist, wobei eine Klemme der Diode an die Steuerelektrode des ersten Transistors und wobei ein der Diode und der Kapazität gemeinsamer Knoten an die Steuerelektrode des zweiten Transistors angeschlossen ist. Diese Ausführungsform stellt eine einfache Realisierung der Schaltungsanordnung zur Ladungsspeicherung dar, bei der die zu speichernde Ladung über die Diode auf die Kapazität fließen kann, wobei die Diode ein Zurückfließen der Ladung verhindert. Vorteilhafterweise ist die dem gemeinsamen Knoten abgewandte Elektrode der Kapazität an ein konstantes Versorgungspotential angeschlossen. Dieses Versorgungspotential bewirkt eine Vorspannung des gemeinsamen Knotens, an den die Steuerelektrode des zweiten Transistors angeschlossen ist, wodurch weniger Ladung über die Diode aufgenommen werden muß.

Gegenstand der Erfindung ist des weiteren ein Verfahren gemäß Patentanspruch 8.

Vorteilhafte Ausgestaltungen der Erfindung werden nachfolgend in Ausführungsbeispielen anhand von Figuren näher erläutert. Es zeigen:
- Fig. 1: erfindungsgemäße Ladungspumpenschaltung gemäß einer ersten Ausführungsform;
- Fig. 2: erfindungsgemäße Ladungspumpenschaltung gemäß einer zweiten Ausführungsform;
- Fig. 3: erste und zweite Ansteuerpotentiale über der Zeit zur Durchführung des erfindungsgemäßen Verfahrens mit einer der Ladungspumpenschaltungen gemäß Fig. 1 oder 2;

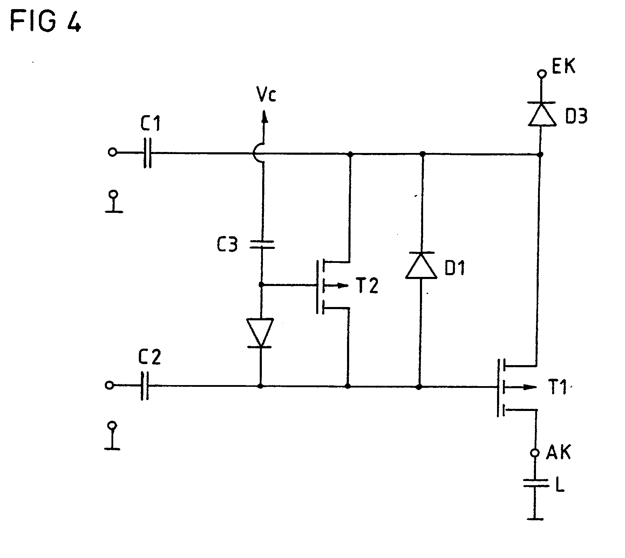

- Fig. 4: erfindungsgemäße Ladungspumpenschaltung gemäß einer dritten Ausführungsform;
- Fig. 5: erste und zweite Ansteuerpotentiale über der Zeit zur Durchführung des erfindungsgemäßen Verfahrens mit einer Ladungspumpenschaltung gemäß Fig. 4.

In den Figuren bezeichnen, sofern nicht anders angegeben, gleiche Bezugszeichen gleiche Bauteile mit gleicher Bedeutung.

Ohne Beschränkung der Allgemeinheit wird die Erfindung nachfolgend unter Verwendung von Feldeffekttransistoren (FET) für die in der erfindungsgemäßen Ladungspumpenschaltung vorkommenden Transistoren beschrieben. Die Steuerelektrode entspricht hierbei der Gate-Elektrode, die Laststrecke der Drain-Source-Strecke bzw. die Laststreckenanschlüsse den Drain- und Source-Anschlüssen.

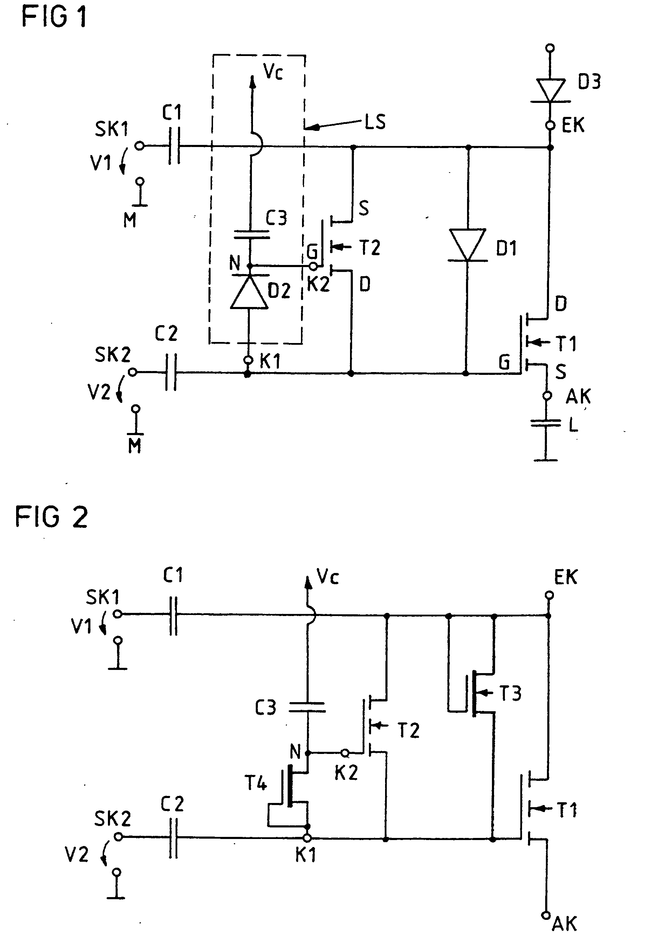

Fig. 1 zeigt eine erfindungsgemäße Ladungspumpenschaltung mit einer Eingangsklemme EK, einer Ausgangsklemme AK, einem ersten Steuereingang SK1 und einem zweiten Steuereingang SK2. Der Ausgangsklemme ist beispielhaft eine kapazitive Last L nachgeschaltet. Es versteht sich, daß die als Kondensator eingezeichnete kapazitive Last L sämtliche Arten kapazitiver Lasten, unter anderem auch Schreibleitungen von EEPROMs, Gate-Elektroden von MOSFETs oder auch weitere erfindungsgemäße Ladungspumpenschaltungen repräsentiert.

Zwischen die Eingangsklemme EK und die Ausgangsklemme AK ist ein als Schalter wirkender, in dem dargestellten Ausführungsbeispiel als n-Kanal-MOSFET ausgebildeter, erster Transistor T1 geschaltet, dessen Gate-Elektrode G über eine erste Diode D1 an die Eingangsklemme EK angeschlossen ist. Zwischen den ersten Steuereingang SK1 und die Eingangsklemme EK ist eine erste Kapazität C1, zwischen den zweiten Steuereingang SK2 und die Gate-Elektrode G des ersten Transistors T1 ist eine zweite Kapazität C2 geschaltet. Aufgabe des ersten Transistors T1 ist es, eine elektrisch leitende Verbindung zwischen der Eingangsklemme EK und der Ausgangsklemme AK herzustellen, um eine auf der ersten Kapazität C1 gespeicherte Ladung auf die kapazitive Last L fließen zu lassen. Um den ersten Transistor T1 zu sperren und damit ein Zurückfließen der Ladung von der kapazitiven Last L zu verhindern, ist ein zweiter ebenfalls als n-Kanal-MOSFET ausgebildeter Transistor T2 vorgesehen, der zwischen die Gate-Elektrode G des ersten Transistors T1 und die Eingangsklemme EK geschaltet ist. Zur Ansteuerung dieses zweiten Transistors T2 ist eine Schaltungsanordnung LS zur Ladungsspeicherung vorgesehen, die mit einer ersten Klemme K1 an die Gate-Elektrode G des ersten Transistors T1 und mit einer zweiten Klemme K2 an die Gate-Elektrode G des zweiten Transistors T2 angeschlossen ist.

Die Schaltungsanordnung LS weist eine Reihenschaltung aus einer Diode D2 und einer Kapazität C3 auf, wobei die Diode D2 mit einer Klemme an die erste Klemme K1 der Schaltungsanordnung LS angeschlossen ist und wobei ein der Diode D2 und der Kapazität C3 gemeinsamer Knoten N an die zweite Klemme K2 der Schaltungsanordnung LS und so an die Gate-Elektrode G des zweiten Transistors T2 angeschlossen ist. Eine dem gemeinsamen Knoten N abgewandte Klemme der Kapazität C3 ist an ein Versorgungspotential Vc angeschlossen.

Aufgabe der erfindungsgemäßen Ladungspumpenschaltung ist es, für die an die Ausgangsklemme AK angeschlossene Last L eine Ausgangsspannung zur Verfügung zu stellen bzw. die kapazitive Last auf eine Spannung zu laden, die über dem Wert einer an die Eingangsklemme EK gelieferten Spannung liegt. Die Funktionsweise der erfindungsgemäßen Schaltung gemäß Fig. 1 und das erfindungsgemäße Verfahren zum Laden der Last soll nachfolgend erläutert werden.

Das Laden der kapazitiven Last L erfolgt in einem mehrstufigen Verfahren, wobei in einem ersten Schritt die erste Kapazität C1 über eine an die Eingangsklemme EK anschließbare Ladungsquelle geladen wird, wobei die Eingangsklemme nach Laden der ersten Kapazität C1 von der Ladungsquelle getrennt wird. Als Ladungsquelle kommt beispielsweise eine Konstantspannungsquelle in Betracht, die für eine vorgegebene Zeitdauer an die Eingangsquelle geschaltet wird. Vorteilhafterweise ist die Ladungsquelle wiederum eine erfindungsgemäße Ladungspumpenschaltung, deren Ausgangsklemme an die Eingangsklemme der dargestellten Ladungspumpenschaltung angeschlossen ist. Eine der Eingangsklemmen EK vorteilhafterweise vorgeschaltete Diode D3 verhindert ein Abfließen der in der ersten Kapazität C1 gespeicherten Ladung über die Eingangsklemme EK. Im Falle mehrstufiger Ladungspumpen ist eine derartige Diode lediglich vor der Eingangsklemme der ersten Pumpstufe erforderlich.

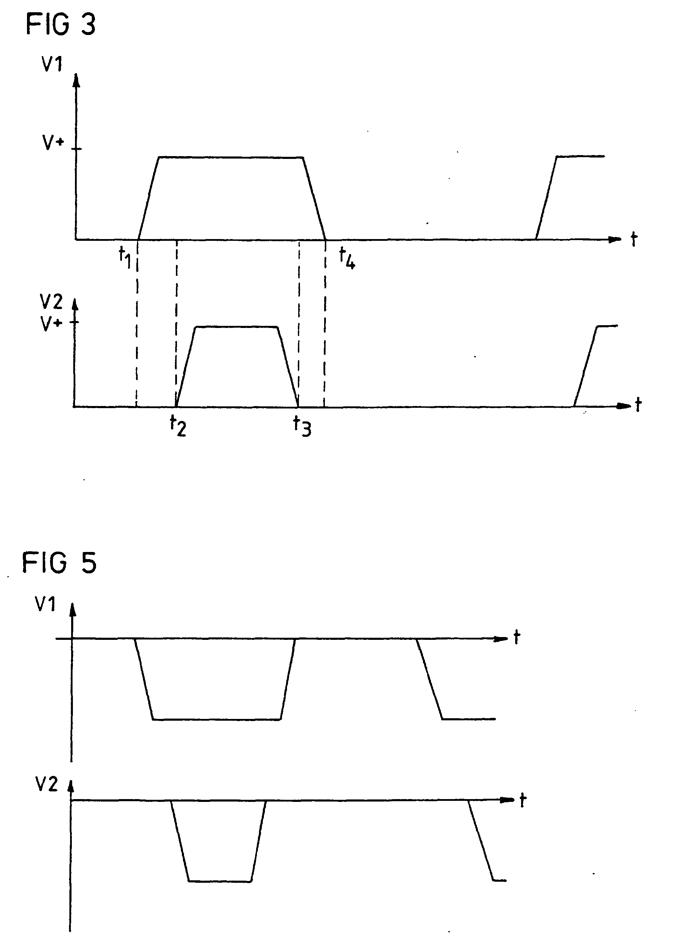

Nach Laden der ersten Kapazität C1 liegt die Eingangsklemme EK auf einem ersten Potential. Wird in einem nächsten Schritt, wie in dem Spannungs-Zeit-Diagramm in Fig. 3 dargestellt ist, ein erstes Ansteuerpotential V1 an dem ersten Steuereingang SK1, das sich bis dahin vorzugsweise auf einem Bezugspotential M befand, um einen Wert V+ erhöht, steigt auch das Potential an der Eingangsklemme entsprechend an. Über die erste Diode D1 wird sowohl die Gate-Elektrode G des ersten Transistors T1 als auch die zweite Kapazität C2 aufgeladen, wobei der Wert des sich dort einstellenden Potentials um den Wert des Spanungsabfalls über der ersten Diode D1 reduziert ist. Vorteilhafterweise ist für die erste Diode, wie in Fig. 2 dargestellt ein selbstleitender Feldeffekttransistor T3 verwendet, der als Diode verschaltet ist. Der Vorteil besteht darin, daß die in Flußrichtung über dem als Diode verschalteten Feldeffekttransistor T3 abfallende Spannung nahezu Null ist.

Die zweite Kapazität C2 ist vorteilhafterweise wesentlich geringer dimensioniert als die erste Kapazität C1, um die auf der ersten Kapazität C1 gespeicherte Ladung möglichst vollständig an die Last L abgeben zu können. Ist die Gate-Elektrode G des ersten Transistors T1 auf das Potential an der Eingangsklemme EK aufgeladen und übersteigt dieses Potential das an der Source-Elektrode S des ersten Transistors T1 bzw. an der Ausgangsklemme AK anliegende Potential beginnt der erste Transistor T1 zu leiten. Die auf der ersten Kapazität C1 gespeicherte Ladung fließt über die Ausgangsklemme AK an die Last L. Dabei steigt das Potential an der Ausgangsklemme AK bzw. an der Source-Elektrode S des ersten Transistors T1 an, wodurch sich dessen Leitfähigkeit reduziert. In einem nächsten Schritt wird daher ein zweites Ansteuerpotential V2 an der zweiten Steuerklemme SK2, das sich bis dahin vorzugsweise auf einem Bezugspotential M befand, um einen Wert V+ erhöht. Das Potential an der Gate-Elektrode G des ersten Transistors T1 steigt damit ebenfalls an. Das Gate-Potential des ersten Transistors T1 befindet sich damit idealerweise um den Wert V+ über dem an der Eingangsklemme EK und dem dadurch maximal an der Ausgangsklemme AK anliegenden Potential. Hierdurch ist ein sicheres Leiten des ersten Transistors und eine Minimierung der über dessen Laststrecke D-S anfallenden Spannungsverluste gewährleistet. Die kapazitive Last kann in Anbetracht lediglich geringer Verluste über der Laststrecke D-S des ersten Transistors T1 annäherungsweise auf das an der Eingangsklemme anliegende Potential aufgeladen werden, das um den Wert V+ über dem ursprünglich an der Eingangsklemme EK zur Verfügung gestellten Potential liegt.

Der Last kann nur die Ladung zufließen, die auf der ersten Kapazität gespeichert war, so daß abhängig von dem Kapazitätsverhältnis der ersten Kapazität C1 zu der Last L das beschriebene Verfahren gegebenenfalls mehrmals durchzuführen ist, um die Last auf die höhere Spannung aufzuladen.

Bei Anlegen des erhöhten zweiten Ansteuerpotentials V2 an den zweiten Steuereingang SK2 wird weiterhin die Kapazität C3 der Schaltungsanordnung LS zur Ladungsspeicherung über die Diode D2 aufgeladen. Der der Diode D2 und der Kapazität C3 gemeinsame Knoten N ist durch die Versorgungsspannungsquelle Vc vorgespannt, wodurch eine geringere Ladung auf die Kapazität C3 fließt als im Falle eines Anschlusses der Kapazität an Bezugspotential M erforderlich wäre. Die Diode D2, die auch als Transistor T4 ausgebildet sein kann, wie in Fig. 2 dargestellt ist, ist so dimensioniert, daß das an dem gemeinsamen Knoten N anliegende Potential den Wert des Potentials an der Eingangsklemme EK nicht übersteigt, solange an dem ersten Steuereingang das um V+ erhöhte Ansteuerpotential V1 anliegt. Hierdurch ist gewährleistet, daß während des Pumpvorgangs, während also Ladung von der ersten Kapazität C1 auf die Last L "gepumpt" wird, der zweite Transistor T2 nicht leitet und damit den ersten Transistor T1 nicht sperrt.

Am Ende des Pumpvorgangs werden das zweite Ansteuerpotential V2 und das erste Ansteuerpotential V1, vorzugsweise nacheinander, zurückgenommen und der erste und zweite Steuereingang SK1, SK2 vorzugsweise auf Bezugspotential M gelegt. Das an der Gate-Elektrode G des zweiten Transistors T2 anliegende Potential übersteigt dann das an der Eingangsklemme EK anliegende Potential bzw. die über der entladenen ersten Kapazität C1 anliegenden Spannung. Der zweite Transistor T2 leitet und entlädt die Gate-Elektrode G des ersten Transistors T1, der damit sperrt und ein Zurückfließen der Ladung von der Last L an die erste Kapazität C1 verhindert.

Fig. 3 zeigt die erfindungsgemäße Ladungspumpenschaltung bei Verwendung von p-Kanal-MOSFET für den ersten und zweiten Transistor. Das Vorzeichen der an den einzelnen Bauelementen anfallenden Spannungen und auch der Ansteuerspannungen V1, V2 (siehe Fig. 5) ist gegenüber den bei den Ladugnspumpenschaltungen gemäß Fig. 1 und 2 auftretenden Spannungen umgekehrt. Die Polung der Dioden D1, D2 ist bei diesem Ausführungsbeispiel vertauscht.

## Patentansprüche

1. Ladungspumpenschaltung die folgende Merkmale aufweist:
eine Eingangsklemme (EK), eine Ausgangsklemme (AK), einen ersten Steuereingang (SK1) und einen zweiten Steuereingang (SK2);
einen ersten Transistor (T1) mit einer Laststrecke (D-S), die zwischen die Eingangsklemme (EK) und die Ausgangsklemme (AK) geschaltet ist, und mit einer Steuerelektrode (G), die über eine erste Diode (D1; T3) an die Eingangsklemme (EK) angeschlossen ist;
eine erste Kapazität (C1), die zwischen den ersten Steuereingang (SK1) und die Eingangsklemme (EK) geschaltet ist;
eine zweite Kapazität (C2), die zwischen den zweiten Steuereingang (SK2) und die Steuerelektrode (G) des ersten Transistors (T1) geschaltet ist;
einen zweiten Transistor (T2) mit einer Steuerelektrode (G) und mit einer Laststrecke (D-S), die zwischen die Eingangsklemme (EK) und die Steuerelektrode (G) des ersten Transistors (T1) geschaltet ist;
**gekennzeichnet durch**
eine Schaltungsanordnung (LS) zur Ladungsspeicherung mit einer ersten Klemme (K1), die an die Steuerelektrode (G) des ersten Transistors (T1) angeschlossen ist, mit einer zweiten Klemme (K2), die an die Steuerelektrode (G) des zweiten Transistors (T2) angeschlossen ist, und mit einer zweiten Diode (D2; T4), die zwischen die erste und zweite Klemme (K1, K2) geschaltet ist.

2. Ladungspumpenechaltung nach Anspruch 1,
**dadurch gekennzeichnet,**
**daß** die Schaltungsanordnung (LS) eine Reihenschaltung der zweiten Diode (D2; T4) und einer Kapazität (C3) aufweist, wobei eine Klemme der Diode (D2) an die Steuerelektrode (G) des ersten Transistors (T1) und wobei ein der Diode (D2; T4) und der Kapazität (C3) gemeinsamer Knoten (N) an die Steuerelektrode (G) des zweiten Transistors (T2) angeschlossen ist.

3. Ladungspumpenschaltung nach Anspruch 2,
**dadurch gekennzeichnet,**
**daß** die dem gemeinsamen Knoten abgewndte Elektrode der Kapazität an ein konstantes Versorgungspotential (Vc) angeschlossen ist.

4. Ladungspumpenschaltung nach einem der vorangehenden Ansprüche,
**dadurch gekennzeichnet,**
**daß** die Dioden als Transistoren (T3, T4) ausgebildet sind, bei denen jeweils die Steuerelektrode (G) mit einem der Laststreckenanschlüsse verbunden ist.

5. Ladungspumpenschaltung nach einem der vorangehenden Ansprüche,
**dadurch gekennzeichnet,**
**daß** die Ausgangsklemme (AK) an eine Steuerelektrode (G) eines Leistungshalbleiterschalters angeschlossen ist.

6. Ladungspumpenschaltung nach einem der Ansprüche 1 bis 4,
**dadurch gekennzeichnet,**
**daß** die Ausgangsklemme (AK) an eine Schreibleitung eines programmierbaren Speicherbausteins angeschlossen ist.

7. Ladungspumpenschaltung nach einem der vorangehenden Ansprüche,
**dadurch gekennzeichnet,**
**daß** an die Eingangsklemme (EK) eine Ausgangsklemme einer weiteren Ladungspumpenschaltung angeschlossen ist.

8. Verfahren zum Laden einer kapazitiven Last, die an die Ausgangsklemme (AK) einer Ladungspumpenschaltung gemäß den vorangehenden Patentansprüchen angeschlossen ist, wobei das Verfahren folgende Verfahrensschritte aufweist:
Anlegen eines ersten Versorgungspotentials an die Eingangsklemme (EK) für eine vorgegebene Zeitdauer zum Aufladen der ersten Kapazität (C1);
Anlegen eines ersten Ansteuerpotentials an den ersten Steuereingang (SK1);
Anlegen eines zweiten Ansteuerpotentials an den zweiten Steuereingang (SK2);
Zurücknehmen des ersten Ansteuerpotentials an dem ersten Steuereingang (SK1);
Zurücknehmen des zweiten Ansteuerpotentials an dem zweiten Steuereingang.

## Claims

1. Charge pump circuit having the following features:
an input terminal (EK), an output terminal (AK), a first control input (SK1) and a second control input (SK2);
a first transistor (T1) having a load path (D-S), which is connected between the input terminal (EK) and the output terminal (AK), and having a control electrode (G), which is connected to the input terminal (EK) via a first diode (D1; T3);
a first capacitance (C1), which is connected between the first control input (SK1) and the input terminal (EK);
a second capacitance (C2), which is connected between the second control input (SK2) and the control electrode (G) of the first transistor (T1);
a second transistor (T2) having a control electrode (G) and having a load path (D-S), which is connected between the input terminal (EK) and the control electrode (G) of the first transistor (T1);
**characterized by**
a circuit arrangement (LS) for charge storage having a first terminal (K1), which is connected to the control electrode (G) of the first transistor (T1), having a second terminal (K2), which is connected to the control electrode (G) of the second transistor (T2), and having a second diode (D2; T4), which is connected between the first and second terminals (K1, K2).

2. Charge pump circuit according to Claim 1,
**characterized**
**in that** the circuit arrangement (LS) has a series circuit formed by the second diode (D2; T4) and a capacitance (C3), a terminal of the diode (D2) being connected to the control electrode (G) of the first transistor (T1), and a node (N) common to the diode (D2; T4) and the capacitance (C3) being connected to the control electrode (G) of the second transistor (T2).

3. Charge pump circuit according to Claim 2,
**characterized**
**in that that** electrode of the capacitance which is remote from the common node is connected to a constant supply potential (Vc).

4. Charge pump circuit according to any of the preceding claims,
**characterized**
**in that** the diodes are embodied as transistors (T3, T4), in which the control electrode (G) is in each case connected to one of the load path connections.

5. Charge pump circuit according to any one of the preceding claims,
**characterized**
**in that** the output terminal (AK) is connected to a control electrode (G) of a power semiconductor switch.

6. Charge pump circuit according to any of Claims 1 to 4,
**characterized**
**in that** the output terminal (AK) is connected to a writing line of a programmable memory component.

7. Charge pump circuit according to any of the preceding claims,
**characterized**
**in that** an output terminal of a further charge pump circuit is connected to the input terminal (EK).

8. Method for charging a capacitive load connected to the output terminal (AK) of a charge pump circuit according to the preceding patent claims, the method having the following method steps:
applying a first supply potential to the input terminal (EK) for a predetermined time duration for the purpose of charging the first capacitance (C1);
applying a first drive potential to the first control input (SK1);
applying a second drive potential to the second control input (SK2);
withdrawing the first drive potential at the first control input (SK1);
withdrawing the second drive potential at the second control input.

## Revendications

1. Circuit de pompe de charge ayant les caractéristiques suivantes :
une borne (EK) d'entrée, une borne (AK) de sortie, une première entrée (SK1) de commande et une deuxième entrée (SK2) de commande ;
un premier transistor (T1) ayant une section (D-S) de charge, qui est montée entre la borne (EK) d'entrée et la borne (AK) de sortie, et une électrode (G) de commande, qui est reliée à la borne (EK) d'entrée par une première diode (D1 ; T3) ;
une première capacité (C1), qui est montée entre la première entrée (SK1) de commande et la borne (EK) d'entrée ;
une deuxième capacité (C2), qui est montée entre la deuxième entrée (SK2) de commande et l'électrode (G) de commande du premier transistor (T1) ;
un deuxième transistor (T2) ayant une électrode (G) de commande et une section (D-S) de charge, qui est montée entre la borne (K) d'entrée et l'électrode (G) de commande du premier transistor (T1) ;
**caractérisé par**
un montage (LS) d'accumulation de charges, comprenant une première borne (K1), qui est reliée à l'électrode (G) de commande du premier transistor (T1), une deuxième borne (K2), qui est reliée à l'électrode (G) de commande du deuxième transistor (T2), et une deuxième diode (D2 ; T4), qui est montée entre la première et la deuxième bornes (K1, K2).

2. Circuit de pompe de charge suivant la revendication 1,
**caractérisé en ce que**
le montage (LS) comporte un circuit série composé de la deuxième diode (D2 ; T4) et d'une capacité (C3), une borne de la diode (D2) étant reliée à l'électrode (G) de commande du premier transistor (T1) et un noeud (N) commun à la diode (D2 ; T4) et à la capacité (C3) étant relié à l'électrode (G) de commande du deuxième transistor (T2).

3. Circuit de pompe de charge suivant la revendication 2,
**caractérisé en ce que**
l'électrode de la capacité, qui est éloignée du noeud commun, est reliée à un potentiel (Vc) d'alimentation constant.

4. Circuit de pompe de charge suivant l'une des revendications précédentes,
**caractérisé en ce que**
les diodes sont constituées sous la forme de transistors (T3, T4), dans lesquels respectivement l'électrode (G) de commande est reliée à l'une des bornes de la section de charge.

5. Circuit de pompe de charge suivant l'une des revendications précédentes,
**caractérisé en ce que**
la borne (AK) de sortie est reliée à une électrode (G) de commande d'un commutateur de puissance à semiconducteur.

6. Circuit de pompe de charge suivant l'une des revendications 1 à 4,
**caractérisé en ce que**
la borne (AK) de sortie est reliée à une ligne d'écriture d'un module de mémoire programmable.

7. Circuit de pompe de charge suivant l'une des revendications précédentes,
**caractérisé en ce que**
une borne de sortie d'un autre circuit de pompe de charge est reliée à la borne (EK) d'entrée.

8. Procédé de chargement d'une charge capacitive, qui est reliée à la borne (AK) de sortie de circuit de pompe de charge suivant les revendications précédentes, le procédé comprenant les stades suivantes :
on applique un premier potentiel d'alimentation à la borne (EK) d'entrée pendant une durée prescrite, pour charger la première capacité (C1) ;
on applique un premier potentiel de commande à la première entrée (SK1) de commande ;
on applique un deuxième potentiel de commande à la deuxième entrée (SK2) de commande ;
on retire le premier potentiel de commande sur la première entrée (SK1) de commande ;
on retire le deuxième potentiel de commande sur la deuxième entrée de commande.
